# EUROPÄISCHE PATENTSCHRIFT

(11) **EP 2 544 916 B1**
(45) Veröffentlichungstag und Bekanntmachung des Hinweises auf die Patenterteilung: **20.07.2016**
(21) Anmeldenummer: 11709677.6
(22) Anmeldetag: 10.03.2011
(51) Int. Cl.: B60L 11/18, H02J 7/02, B60R 13/10, H02J 50/10

(54) **ÜBERTRAGUNGSSYSTEM ZUM LADEN DER TRAKTIONSBATTERIEN EINES ELEKTRISCH ANGETRIEBENEN KRAFTFAHRZEUGS**
TRANSMISSION SYSTEM FOR CHARGING THE TRACTION BATTERIES OF AN ELECTRICALLY DRIVEN MOTOR VEHICLE
SYSTÈME DE TRANSMISSION POUR CHARGER DES BATTERIES DE TRACTION D'UN VÉHICULE AUTOMOBILE À ENTRAÎNEMENT ÉLECTRIQUE

(30) Priorität: 04.06.2010 DE 102010022740; 12.03.2010 DE 102010011235
(43) Veröffentlichungstag der Anmeldung: 16.01.2013
(73) Patentinhaber: Leopold Kostal GmbH & Co. KG, 58513 Lüdenscheid (DE)
(72) Erfinder: WELSCHHOLZ, Jörg, 58849 Herscheid (DE)
(86) Internationale Anmeldenummer: PCT/EP2011/053650
(87) Internationale Veröffentlichungsnummer: WO 2011/110645

(56) Entgegenhaltungen:
- EP-A2- 0 788 211
- DE-U1-202009 007 394
- DE-U1-202009 007 394
- US-A1- 2010 201 309

## Beschreibung

Die Erfindung betrifft ein Übertragungssystem zum Laden der Traktionsbatterien eines elektrisch angetriebenen Kraftfahrzeugs an einer Ladestation, aufweisend ein an dem Kraftfahrzeug angeordnetes fahrzeugseitiges Transformatorteil, sowie seitens der Ladestation aufweisend, eine an das Kraftfahrzeug anfügbare Ankoppelvorrichtung mit mindestens einem Transformatorteil, durch das elektrische Energie auf das Transformatorteil am Kraftfahrzeug übertragen werden kann.

Ein derartiges Übertragungssystem ist beispielsweise aus der deutschen Auslegeschrift DT 24 34 890 B1 bekannt. Hierin ist vorgeschlagen, sowohl an einem Kraftfahrzeug als auch an einem Stillstandsplatz für das Kraftfahrzeug jeweils Transformatorteile vorzusehen, die aneinander anfügbar sind. Sobald die Transformatorteile miteinander verbunden sind, kann auf induktivem Weg elektrische Energie aus einem Wechselspannungs- oder Drehstromnetz auf das Kraftfahrzeug übertragen werden. Das dem Kraftfahrzeug zugeordnete Transformatorteil ist in einer vorderen Stoßstange des Kraftfahrzeugs und das dem Stillstandsplatz zugeordnete Transformatorteil in einer horizontalen Ladeplanke angeordnet. Um eine luftspaltfreie Ankopplung zu erreichen, sind die beiden Transformatorteile jeweils federnd gelagert.

Der Gegenstand der DT 24 34 890 B1 setzt voraus, dass die Form, die Abmessungen und die räumliche Anordnung der zu verbindenden Transformatorteile am Stillstandsplatz und am Kraftfahrzeug in zueinander passender Weise ausgebildet sind. Diese auf den ersten Blick naheliegend erscheinende Anforderung ist in konkreten Realisierungen keineswegs einfach zu erfüllen, und zwar insbesondere dann nicht, wenn das Übertragungssystem mit sehr verschiedenartig gebauten Kraftfahrzeugen zur Anwendung kommen soll. Das fahrzeugseitige Transformatorteil muss dabei immer passend zur Anordnung des Transformatorteils am Stillstandsplatz ausgerichtet sein. Die Ankopplung an ein Transformatorteil im Bereich der vorderen Stoßstange wird bei modernen Kraftfahrzeugen dadurch erschwert, dass die Stoßstange dort zumeist durch Karosserieteile, etwa durch die so genannte Frontschürze, verdeckt ist. Überdies können verschiedene Fahrzeugtypen sehr unterschiedliche Karosserieformen aufweisen, was eine genaue Ausrichtung von Transformatorteilen zueinander zusätzlich erschwert.

Ein gattungsgemäßes Energieübertragungssystem ist auch aus der europäischen Patentanmeldung EP 0 788 211 A2 bekannt. Die Druckschrift beschreibt eine induktive Energieübertragung von einer Ladestation zu einem Kraftfahrzeug mittels aneinander ankoppelbarer Spulen, die zueinander positionierbar sind.

In der deutschen Gebrauchsmusterschrift DE 20 2009 007 394 U1 wird vorgeschlagen, einen Anschluss für einen, zu den üblichen Automobilkraftstoffen, alternativen Energieträger (Strom, Gas) hinter einem Kennzeichenschild anzuordnen. Damit auf den Anschluss zugegriffen werden kann, ist das Kennzeichenschild beweglich (klappbar, schwenkbar oder drehbar) angeordnet. Eine berührungslose und insbesondere induktive Energieübertragung wird in diesem Dokument nicht in Betracht gezogen.

Es stellte sich die Aufgabe, ein Übertragungssystem zum Laden der Traktionsbatterien eines elektrisch angetriebenen Kraftfahrzeugs so auszubilden, dass es möglichst einfach, universell und komfortabel verwendbar ist.

Diese Aufgabe wird erfindungsgemäß dadurch gelöst, dass das fahrzeugseitige Transformatorteil hinter einem Kennzeichenschild des Kraftfahrzeugs angeordnet ist, und dass an die Außenfläche des Kennzeichenschildes eine Anlagefläche der Ankoppelvorrichtung anfügbar ist.

Vorteilhaft hierbei ist, dass amtliche Kennzeichenschilder im allgemeinen an standardisierten Anbauorten angeordnet sind. So sind bei den meisten Kraftfahrzeugen die Kennzeichenschilder mittig an der Fahrzeugfront und am Fahrzeugheck befestigt, wobei die Mindestanbauhöhen über der Fahrbahn vorgeschrieben sind. Aber auch bei abweichender Positionierung sind die Kennzeichenschilder an der Fahrzeugkarosserie immer leicht auffindbar. Bei Kraftfahrzeugen, bei denen erfindungsgemäß das fahrzeugseitige Transformatorteil hinter dem vorderen oder dem hinteren Kennzeichenschild angeordnet ist, ist somit auch die Anfügestelle für die Ankoppelvorrichtung der Ladestation unmittelbar zu lokalisieren.

Das Kennzeichenschild besteht entweder vollständig oder aber zum größten Teil aus einem elektrisch nicht leitenden oder schlecht leitenden Material, da hierdurch Wirbelstromverluste bei der induktiven Energieübertragung gering gehalten werden können. Vorzugsweise besteht das Kennzeichenschild aus aus einem Kunststoffmaterial, wobei aber auch die Verwendung anderer elektrisch nicht- oder geringleitender Materialien oder Materialkombinationen als Werkstoff in Frage kommt. Zu erwähnen ist, dass elektrisch leitfähige Materialien mit nur geringen Ausdehnungen im Übertragungsweg die induktive Energieübertragung nur wenig beeinflussen. Daher kann beispielsweise ohne weiteres vorgesehen sein, die amtliche Registriernummer in Form einer dünnen Metallbeschichtung auf das ansonsten nicht- oder geringleitende Kennzeichenschild aufzubringen.

Die Ankoppelvorrichtung mit dem Transformatorteil der Ladestation braucht nur von außen an das Kennzeichenschild angelegt zu werden, um induktiv mit dem fahrzeugseitigen Transformatorteil verbunden zu werden. Da die Transformatorteile dann nur durch das relativ dünnwandige Kennzeichenschild getrennt sind, kann die Energieübertragung mit einem sehr guten Wirkungsgrad erfolgen.

Besonders vorteilhaft ist es, wenn die Ankoppelvorrichtung eine Anlagefläche aufweist, deren Abmessungen genau der Normgröße eines Kennzeichenschildes entsprechen, da sich hierdurch beim Anfügen der Ankoppelvorrichtung an das Kennzeichenschild eine positionsgenaue Anordnung der Transformatorteile zueinander auf besonders einfache Weise ergibt.

In einer Weiterbildung der Erfindung kann vorgesehen sein, dass die Ankoppelvorrichtung durch eine Steuervorrichtung elektromotorisch positionierbar ist. Dabei ist es besonders vorteilhaft ist, wenn zusätzliche Mittel zur genauen Positionserkennung des Kennzeichenschildes vorgesehen sind, zu denen beispielsweise eine mit der Steuervorrichtung zusammenwirkende Kamera gehören kann. Hierdurch ist es möglich, die Ankoppelvorrichtung vollautomatisch an die Außenfläche des Kennzeichenschildes anzulegen und so die Kopplung der Transformatorteile herzustellen.

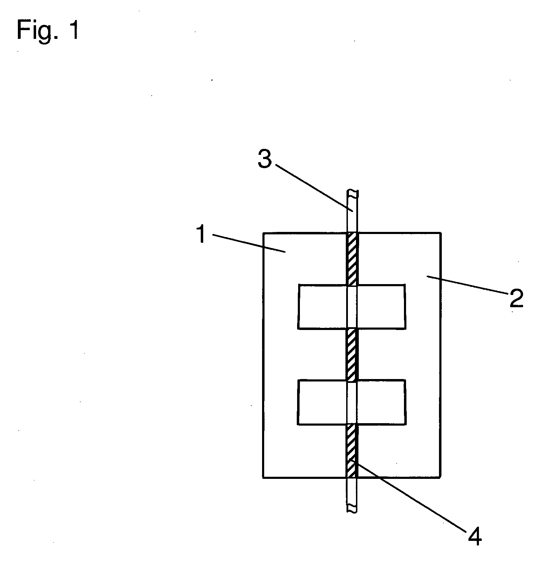

Die einzige Figur zeigt in einer stark vereinfachten Darstellung eine besonders vorteilhafte Ausgestaltung eines Übertragungssystems. Erkennbar ist ein E-förmiges Joch 1, das Bestandteil des Transformatorteils einer Ladestation ist, sowie ein ebenfalls E-förmiges Joch 2, das zu einem fahrzeugseitigen Transformatorteil gehört. Unter einem Transformatorteil soll hier jeweils ein mit mindestens einer Wicklung versehenes Joch 1, 2 verstanden werden. Auf eine Darstellung dieser Wicklungen, sowie von damit verbundenen elektrischen Einrichtungen wurde hier verzichtet. Diesbezügliche Details sind beispielsweise aus der DT 24 34 890 B1 bekannt.

Endabschnitte beider Joche 1, 2 liegen an einander gegenüberliegenden Flächen eines im Schnitt dargestellten Kennzeichenschildes 3 an, so dass die Jochenden beider Transformatorteile, getrennt durch das Kennzeichenschild 3, einander gegenüberstehen.

Vorteilhafterweise weist das aus Kunststoff bestehende Kennzeichenschild 3 zwischen den einander gegenüberstehenden Abschnitten der beiden Joche 1, 2 magnetisch gut leitende Bereiche 4 auf, in denen der Kunststoff mit einem ferromagnetischen Material gefüllt ist. Hierdurch kann die Kopplung der beiden Transformatorteile weiter verbessert werden. Eine solche Konfiguration kann vorteilhaft in einem Zwei-Komponenten-Spritzgießverfahren hergestellt werden, wobei ein erstes ungefülltes Kunststoffmaterial einen Rahmen mit mehreren Ausnehmungen ausbildet, welche durch ein zweites, mit einem ferromagnetischen Material gefüllten Kunststoffmaterial aufgefüllt werden.

Zum Laden der Traktionsbatterien fährt der Fahrer des elektrisch angetriebenen Fahrzeugs an eine Ladestation heran und fügt manuell die Ankoppelvorrichtung an die Außenseite des amtlichen Kennzeichenschildes an, hinter der das fahrzeugseitige Transformatorteil angeordnet ist.

Bei besonders vorteilhaft ausgebildeten Ladestationen erfolgt das Anfügen der Ankoppelvorrichtung ohne menschliche Mitwirkung vollautomatisch, wobei eine kameragestützte Positionierungsvorrichtung die genaue Lage des Kennzeichenschildes erkennt und die Ankoppelvorrichtung positionsgenau an die Außenfläche des Kennzeichenschildes anlegt.

Das Transformatorteil der Ladestation überträgt nun zum Laden der Traktionsbatterien elektrische Energie auf das fahrzeugseitige Transformatorteil, bis beispielsweise ein vorgewählter Energiebetrag an das Kraftfahrzeug abgegeben wurde, oder ein Absinken des Ladestroms signalisiert, dass die Traktionsbatterien wieder ausreichend aufgeladen sind. Der Ladevorgang endet mit dem manuellen oder automatischen Entfernen der Ankoppelvorrichtung von der Außenfläche des Kennzeichenschildes.

## Patentansprüche

1. Übertragungssystem zum Laden der Traktionsbatterien eines elektrisch angetriebenen Kraftfahrzeugs an einer Ladestation, aufweisend ein an dem Kraftfahrzeug angeordnetes fahrzeugseitiges Transformatorteil, sowie seitens der Ladestation aufweisend, eine an das Kraftfahrzeug anfügbare Ankoppelvorrichtung mit mindestens einem Transformatorteil, durch das elektrische Energie auf das Transformatorteil am Kraftfahrzeug übertragen werden kann,
**dadurch gekennzeichnet,**
**dass** das fahrzeugseitige Transformatorteil hinter einem Kennzeichenschild (3) des Kraftfahrzeugs angeordnet ist, und
**dass** an die Außenfläche des Kennzeichenschildes (3) eine Anlagefläche der Ankoppelvorrichtung anfügbar ist.

2. Übertragungssystem nach Anspruch 1, **dadurch gekennzeichnet, dass** das Kennzeichenschild (3) vollständig oder größtenteils aus einem elektrisch nicht leitenden Material besteht.

3. Übertragungssystem nach Anspruch 1, **dadurch gekennzeichnet, dass** das Kennzeichenschild (3) vollständig oder größtenteils aus einem elektrisch schlecht leitenden Material besteht.

4. Übertragungssystem nach Anspruch 2 oder 3, **dadurch gekennzeichnet, dass** das Kennzeichenschild (3) vollständig oder größtenteils aus Kunststoff besteht.

5. Übertragungssystem nach einem der Ansprüche 2 bis 4, **dadurch gekennzeichnet, dass** das Kennzeichenschild (3) Bereiche (4) aufweist, die mit einem ferromagnetischen Material gefüllt sind.

6. Übertragungssystem nach Anspruch 1, **dadurch gekennzeichnet, dass** die Abmessungen der Anlagefläche der Ankoppelvorrichtung den Abmessungen der Außenfläche des Kennzeichenschilds (3) entsprechen.

7. Übertragungssystem nach Anspruch 1, **dadurch gekennzeichnet, dass** die Ankoppelvorrichtung motorisch beweglich ausgebildet ist.

8. Übertragungssystem nach Anspruch 7, **dadurch gekennzeichnet, dass** Mittel zur Positionserfassung des Kennzeichenschildes (3) vorgesehen sind und dass eine automatische Steuervorrichtung aufgrund der erfassten Position die Anlagefläche der Ankoppelvorrichtung an die Außenfläche des Kennzeichenschildes (3) anlegt.

9. Übertragungssystem nach Anspruch 8, **dadurch gekennzeichnet, dass** zu den Mittel zur Positionserfassung des Kennzeichenschildes (3) eine Kamera gehört.

## Claims

1. Transmission system for charging the traction batteries of an electrically driven vehicle at a charging station, having a transformer member located on the vehicle and having a coupling facility on the charging station side which can be attached to the vehicle and which has at least one transformer member by means of which the electrical energy can be transmitted to the transformer member on the vehicle,
**characterised in that**
the transformer member on the vehicle side is located behind a registration plate (3) of the vehicle, and
that a contact surface of the coupling facility can be attached to the outer surface of the registration plate (3).

2. Transmission system according to Claim 1, **characterised in that** the registration plate (3) is completely or mainly composed of a material which is electrically non-conductive.

3. Transmission system according to Claim 1, **characterised in that** the registration plate (3) is completely or mainly composed of a material with low electrical conductivity.

4. Transmission system according to Claim 2 or Claim 3, **characterised in that** the registration plate (3) is completely or mainly composed of plastic.

5. Transmission system according to any of Claims 2 to 4, **characterised in that** the registration place (3) has sections (4) which are filled with a ferromagnetic material.

6. Transmission system according to Claim 1, **characterised in that** the dimensions of the contact surface of the coupling facility correspond to the dimensions of the outer surface of the registration plate (3).

7. Transmission system according to Claim 1, **characterised in that** the coupling facility is of a motorically movable design.

8. Transmission system according to Claim 7, **characterised in that** means are provided for recording the position of the registration plate (3) and that an automatic control device applies the contact surface of the coupling facility to the outer surface of the registration plate (3) on the basis of the recorded position.

9. Transmission system according to Claim 8, **characterised in that** a camera is included in the means for recording the position of the registration plate (3).

## Revendications

1. Système de transfert pour charger des batteries de traction d'un véhicule à entraînement électrique à un poste de charge, lequel comprend, côté véhicule, un élément de transformateur, aménagé sur le véhicule automobile, ainsi que, côté poste de charge, un dispositif de couplage assemblable au véhicule automobile, avec au moins un élément de transformateur, par lequel l'énergie électrique peut être transférée à l'élément de transformateur équipant le véhicule automobile,
**caractérisé en ce que**
l'élément de transformateur, côté véhicule, est disposé derrière une plaque d'immatriculation (3) du véhicule automobile, et
que, sur la face extérieure de la plaque d'immatriculation (3) une surface d'appui peut être assemblée avec le dispositif de couplage.

2. Système de transfert selon la revendication 1, **caractérisé en ce que** la plaque d'immatriculation (3) consiste, entièrement ou en grande partie, en un matériau non conducteur d'électricité.

3. Système de transfert selon la revendication 1, **caractérisé en ce que** la plaque d'immatriculation (3) consiste, entièrement ou en grande partie, en un matériau mauvais conducteur d'électricité

4. Système de transfert selon revendication 2 ou 3, **caractérisé en ce que** la plaque d'immatriculation (3) consiste, entièrement ou en grande partie, en matière synthétique.

5. Système de transfert selon l'une des revendications 2 à 4, **caractérisé en ce que** la plaque d'immatriculation (3) présente des secteurs (4) qui sont remplis de matériau ferromagnétique.

6. Système de transfert selon la revendication 1, **caractérisé en ce que** les dimensions de la surface d'appui du dispositif de couplage correspondent aux dimensions de la face extérieure de la plaque d'immatriculation (3).

7. Système de transfert selon la revendication 1, **caractérisé en ce que** le dispositif de couplage est mû par moteur.

8. Système de transfert selon la revendication 7, **caractérisé en ce que** des moyens de détection de la position de la plaque d'immatriculation (3) sont prévus et qu'un dispositif de commande automatique est appliqué sur la face extérieure de la plaque d'immatriculation (3) en raison de la position de la surface d'appui du dispositif de couplage qui est détectée.

9. Système de transfert selon la revendication 8, **caractérisé en ce qu'**une caméra fait partie des moyens de détection de la position de la plaque d'immatriculation (3).
